# EUROPEAN PATENT SPECIFICATION

(11) **EP 3 228 518 B1**
(45) Date of publication and mention of the grant of the patent: **03.02.2021**
(21) Application number: 15864720.6
(22) Date of filing: 02.12.2015
(51) Int. Cl.: B61F 5/10, B60G 99/00, B61F 5/22, B61F 5/38

(54) **RAILWAY VEHICLE**
SCHIENENFAHRZEUG
VÉHICULE FERROVIAIRE

(30) Priority: 05.12.2014 JP 2014247070
(43) Date of publication of application: 11.10.2017
(73) Proprietor: Nippon Steel Corporation, Tokyo 100-8071 (JP)
(72) Inventor: KIKKO, Satoshi, Tokyo 100-8071 (JP); SHIMOKAWA, Yoshiyuki, Tokyo 100-8071 (JP); NAKAI, Takuji, Tokyo 100-8071 (JP); HAGIO, Yoshinori, Tokyo 100-8071 (JP)
(74) Representative: Zimmermann & Partner Patentanwälte mbB
(86) International application number: PCT/JP2015/083885
(87) International publication number: WO 2016/088806

(56) References cited:
- WO-A1-2012/147195
- JP-A- H02 227 365
- JP-A- H03 178 862
- JP-A- H03 186 472
- JP-A- 2003 237 572

## Description

### TECHNICAL FIELD

The present invention relates to a railway vehicle having bogies oriented in a forward and rearward direction of travel of the railway vehicle, both of which have air springs disposed in the left and right width direction (referred to below simply as left and right) of the railway vehicle. In particular, the present invention relates to a railway vehicle for which a wheel load variation can be suppressed in a transition curved section.

### BACKGROUND ART

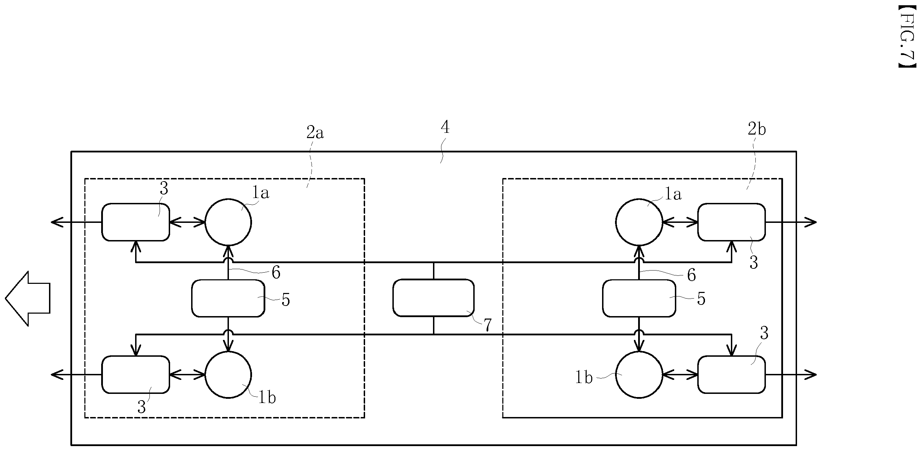

As shown in FIG. 7, a railway vehicle having bogies with air springs 1a and 1b disposed on the left and right is equipped with an automatic level controlling device (referred to below as LV) 3 having a link and a leveling valve that work together. This LV 3 automatically adjusts a volume of compressed air supplied to an inner portion of the air springs 1a and 1b in response to a load which from time to time operates on the railway vehicle, keeping the height of a railway vehicle body 4 constant. The bogie that is positioned in the forward direction of travel of the railway vehicle is referred to as a front bogie 2a, and the bogie that is positioned in the rearward direction of travel of the railway vehicle is referred to as a rear bogie 2b.

A left-right differential pressure regulating valve 5 is disposed at an air pipe 6 that connects the left and right air springs 1a and 1b in the railway vehicle, in order to maintain a balanced pressure within the left and right air springs 1a and 1b when a large differential pressure has developed within the left and right air springs 1a and 1b.

In FIG 7, Reference Numeral 7 is a main air reservoir that holds compressed air supplied to the left and right air springs 1a and 1b of the bogies 2a and 2b. The main air reservoir 7 is connected to the air springs 1a and 1b via the LV 3.

A track in a curved section is laid at an incline known as a cant so as to eliminate a centrifugal force acting on the railway vehicle while passing through a curved section. Between a curved section having a cant and a level straight section without a cant, there is a twisting section of track known as a transition curved section.

When a railway vehicle passes through such a transition curved section, the twisting of the track is absorbed by a primary spring (an axle spring) and a secondary spring (an air spring). However, a difference in the wheel load is generated between a wheel on an outer track side and a wheel on an inner track side of the railway vehicle as a reactive force while the railway vehicle passes through the transition curved section.

A ratio of the difference in the wheel load is referred to as a ration of the wheel unloading, and is expressed by the ratio of the wheel load on the outer track side or the wheel load on the inner track side with respect to the average wheel load of the inner track side and the outer track side (wheel load on the outer track side + the wheel load on the inner track side) / 2), and indicates how much the wheel load has fluctuated. For example, the ration of the wheel unloading of a wheel on the outer track side is expressed by {(average wheel load - wheel load on the outer track side) / average wheel load} × 100%.

In the case of a transition curved section on a curve exit side, for example, the wheel load on an outer track side in a wheelset in a forward direction of travel of the railway vehicle keeps decreasing, and because the reverse lateral pressure is high when passing through a curved section, the railway vehicle can easily derail. Therefore, it is very important from the standpoint of safety to suppress wheel load variation when passing through a transition curved section.

However, when a railway vehicle stops in a transition curved section on a curve exit side which is a section with diminishing cant, for example, the LV functions to keep the air spring height constant.

When this happens, the front bogie 2a which is in a position of low cant (see FIG. 8) acts on the part of the vehicle body 4 in the forward direction of travel to generate a counter-clockwise moment (see FIG. 9). Moreover, the rear bogie 2b which is in a position of high cant acts on the part of the vehicle body 4 in the rearward direction of travel to generate a clockwise moment (see FIG. 10).

Accordingly, the front bogie and the rear bogie cause the vehicle body to rotate in opposite directions. However, because the torsional rigidity of the vehicle body is high, the vehicle body comes to a stop at a position where the moments generated by the front bogie and the rear bogie are in balance.

In this state, the height of the air springs of the front and rear bogies both deviate from the control target values, so the LV continues to supply air and discharge air to the air springs. Accordingly, a pressure differential occurs within the air springs that are diagonal from each other, and the wheels bear unequal loads.

As a result, the internal pressure of the air springs on the inner track side of the front bogie and on the outer track side of the rear bogie increases, and the internal pressure of the air springs on the outer track side of the front bogie and on the inner track side of the rear bogie decreases, generating a wheel load variation. This wheel load variation causes a decrease of wheel load on the wheel of the air spring side with low internal pressure.

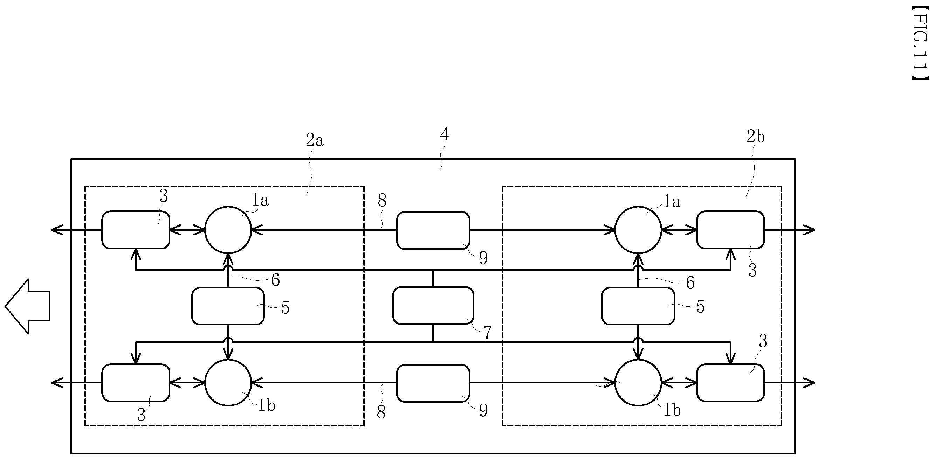

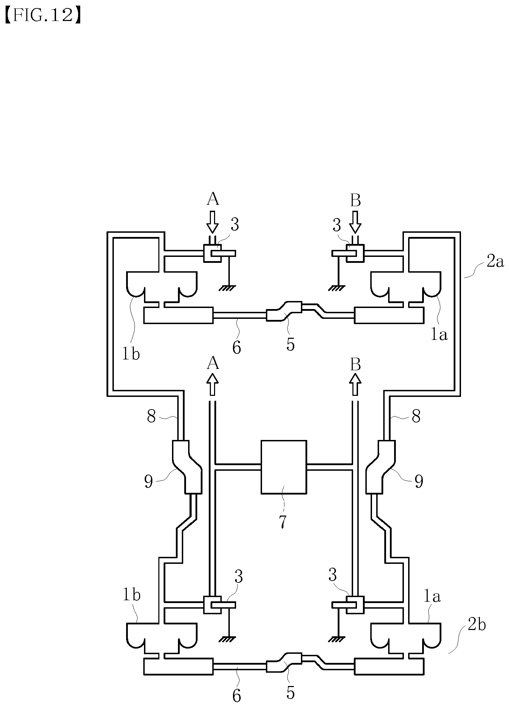

According to the railway vehicle disclosed in Patent Reference 1, a left-right differential pressure regulating valve 5 is provided to open when the internal pressure difference in the left and right air springs 1a and 1b exceeds a set differential pressure ΔP1. Moreover, the air springs 1a and 1a and 1b and 1b on the same sides of the front bogie 2a and the rear bogie 2b are connected by an air pipe 8, and a front-rear differential pressure regulating valve 9 is provided to open when the internal pressure difference in the air springs 1a and 1a and 1b and 1b on the same side as the air pipe 8 exceeds a set differential pressure ΔP2 (see FIGS. 11 and 12).

According to the railway vehicle disclosed in Patent Reference 1, when the railway vehicle stops in a transition curved section on a curve exit side, for example, a moment operates on the front part and on the back part of the vehicle body in opposite directions. In cases where the internal pressure of the air springs on the inner track side of the front bogie and on the outer track side of the rear bogie is higher than the internal pressure of the air springs on the outer track side of the front bogie and on the inner track side of the rear bogie, the front-rear differential pressure regulating valves on the left and right both open so that the front and rear air springs are connected. As a result, the internal pressure difference in the front and rear air springs on the left and right sides is eliminated, and the internal pressure in all of the air springs in the front and rear bogies equalize, so as to suppress fluctuations in the wheel load.

In other words, according to the railway vehicle disclosed in Patent Reference 1, the internal pressure in all of the air springs in the front and rear bogies equalize, and wheel load variation is suppressed only in cases where the difference in internal pressure in the front and rear air springs exceeds the set differential pressure ΔP2 of the front-rear differential pressure regulating valve.

Patent Reference 1 recites that it is possible to reduce wheel load variation below that of the prior art by making the set differential pressure ΔP2 of the front-rear differential pressure regulating valve lower than the set differential pressure ΔP1 of the left-right differential pressure regulating valve.

Patent Reference 2 describes a device and method for preventing wheel weight fluctuation for a railway vehicle, wherein a wheel weight fluctuation preventing valve 5 is provided between each of a front air spring 1, 2 of a front bogie 9 and a rear air spring 3, 4 of a rear bogie 10. The wheel weight fluctuation preventing valve 5 prevents the occurrence of an inner pressure difference and prevents the occurrence of a wheel weight fluctuation.

However, when the set differential pressure ΔP2 of the front-rear differential pressure regulating valve is lowered, there is no longer a resistance to items (1)-(3) below.
(1) Imbalance in the front-rear direction of the vehicle body (referred to below simply as the front-rear imbalance)
(2) Pitching oscillation of the vehicle body generated during acceleration and deceleration or when traveling on a track having differences in elevation (referred to below simply as the vehicle body pitching oscillation)
(3) Vehicle body pitching vibration caused by disturbances in the height direction of the track (referred to below simply as the vehicle body pitching vibration)

In this Specification, vibration refers to a high-frequency vibration of 0.6 Hz or higher. Oscillation refers to a low-frequency vibration lower than 0.6 Hz.

### PRIOR ART REFERENCES

### PATENT REFERENCES

Patent Reference 1: Japanese Patent Application Kokai Publication No. H03-178862
Patent Reference 2: Japanese Patent Application Publication No. H03-186472 A

### SUMMARY OF THE INVENTION

### PROBLEMS TO BE SOLVED BY THE INVENTION

The problem that the present invention aims to solve is that according to the railway vehicle disclosed in Patent Reference 1, when the set differential pressure ΔP2 of the front-rear differential pressure regulating valve is lower than the set differential pressure ΔP1 of the left-right differential pressure regulating valve, there is no longer a resistance to the front-rear imbalance, the vehicle body pitching oscillation, and the vehicle body pitching vibration.

### MEANS FOR SOLVING THESE PROBLEMS

The object of the present invention is to suppress wheel load variation that occurs when a railway vehicle stops in a section with diminishing cant such as a transition curved section, while taking into consideration resistance to the front-rear imbalance, the vehicle body pitching oscillation, and the vehicle body pitching vibration.

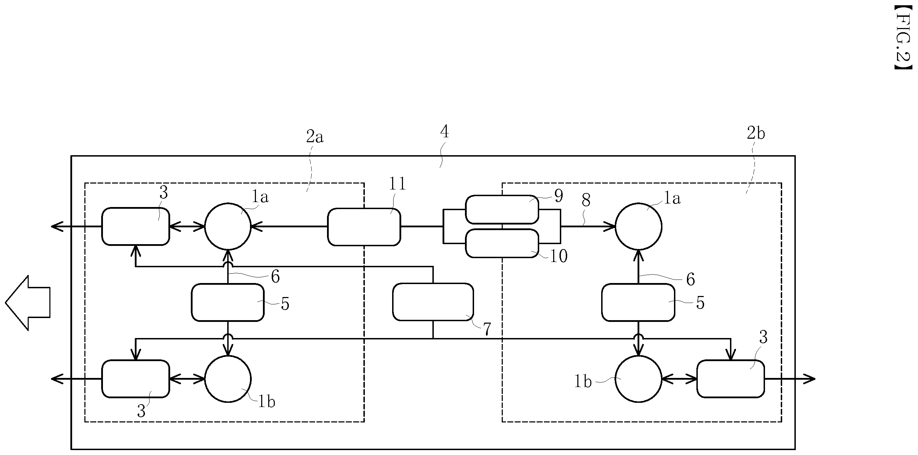

For achieving the above-mentioned object there is provided a railway vehicle as defined in claim 1. Preferred embodiments are defined by dependent claims 2 to 6. A railway vehicle having a front bogie 2a and a rear bogie 2b with left and right air springs 1a and 1b and having an LV 3 installed to track the height of the air springs 1a and 1b, wherein the left and right air springs 1a and 1b of the front bogie 2a and the rear bogie 2b are connected by an air pipe 6 in which is installed a left-right differential pressure regulating valve 5. In addition Structures A-C are employed. As needed, Structures D and E are added.
A) The air springs 1a and 1a or 1b and 1b on either the left or right side of the front bogie 2a and the rear bogie 2b are connected by an air pipe 8 in which is installed the front-rear differential pressure regulating valve 9 in midstream. Alternatively, the air springs 1a and 1a and 1b and 1b on both the left and right sides of the front bogie 2a and the rear bogie 2b are connected by an air pipe 8 in which is installed the front-rear differential pressure regulating valve 9 in midstream. It is not necessarily the case that the LV 3 must be installed for all air springs 1a, 1a, 1b, and 1b. As shown in FIG. 2, the LV 3 may be installed for only the three air springs 1a, 1b, and 1b. By employing such a structure, it becomes possible to lower the set differential pressure ΔP2 of the front-rear differential pressure regulating valve that forms a resistance to the front-rear imbalance, the vehicle body pitching oscillation, and the vehicle body pitching vibration. According to the present invention, the front-rear differential pressure regulating valve is provided particularly to suppress the vehicle body pitching oscillation.
   In addition to Structure A above, Structures B-E can be employed to suppress wheel load variation more effectively than in the prior art.
B) A choke valve 10 is installed in parallel with the front-rear differential pressure regulating valve 9.
   In cases where a railway vehicle travels at a very low speed in a station or in a transition curved section on a curve exit side because of a signal, or has stopped, the action of the LV discharges air from the air springs on the outer rail side of the front bogie and on the inner rail side of the rear bogie, thereby reducing the internal pressure. On the other hand, air is supplied to the air springs on the inner track side of the front bogie and the outer track side of the rear bogie, thereby increasing the internal pressure. Consequently, the differential pressure of the air springs that are located diagonally from each other (referred to below as diagonal differential pressure) increases. The choke valve referred to in this Specification has a structure that changes the cross-sectional area of a flow channel in order to generate a choked flow.

However, if the diagonal differential pressure is less than the set differential pressure ΔP2 of the front-rear differential pressure regulating valve, then the diagonal differential pressure is not eliminated.

Thus, in order to prevent this phenomenon, a choke valve is installed in parallel with the front-rear differential pressure regulating valve, so that when the railway vehicle travels at a very low speed in a transition curved section, or when it has stopped, the differential pressure is eliminated on the side where the air pipe is installed.

A special feature of the choke valve is that it affects only the vehicle body pitching vibration, and not the front-rear imbalance and the vehicle body pitching oscillation. An additional special feature of the choke valve is that it allows a volume of air to flow between the front bogie air springs and the rear bogie air springs that is greater than the volume of air supplied and discharged by the LV when the railway vehicle travels at a very low speed or when it is stopped. A choke valve having these two special features is an orifice choke valve.

Even if a choke valve is used that allows a volume of air to flow that is smaller than the volume of air supplied and discharged by the LV, it has the effect of eliminating the diagonal differential pressure after the railway vehicle passes through a curved section.
C) A differential pressure regulating valve 11 for front-rear imbalance is installed in series with the front-rear differential pressure regulating valve 9.
   In the case of a railway vehicle with a motorman's cab or a railway vehicle with a toilet, an imbalance occurs between the front and rear of the vehicle. By using the differential pressure regulating valve for front-rear imbalance to respond to this front-rear imbalance, the front-rear differential pressure regulating valve may respond only to the vehicle body pitching oscillation and the vehicle body pitching oscillation, making it possible to reduce the diagonal differential pressure by decreasing the set differential pressure ΔP2 of the front-rear differential pressure regulating valve.
   The front-rear imbalance can be eliminated even if air springs with differing effective diameters are installed in the front and rear.
D) The LV 3 that operates on the air springs located near the choke valve 10 is removed.
   In cases where a railway vehicle travels at a very low speed in a station or in a transition curved section on a curve exit side because of a signal, or has stopped, diagonal differential pressure resulting from the action of the LV increases, and decrease of wheel load occurs. Therefore, because structure D is used, there are no longer any discharges of air from the air springs after the LV is removed, making it possible to further reduce the diagonal differential pressure (see Kunihito Sato, Wheel Load Distribution of Air Suspension Car, Report 2, Logical Static Analyses about Several Elements of Car, "Tokyu Sharyo Technical Review" March 1978, No. 32, p. 17-21).
E) A variable load differential pressure valve is used in response to the passenger occupancy rate.

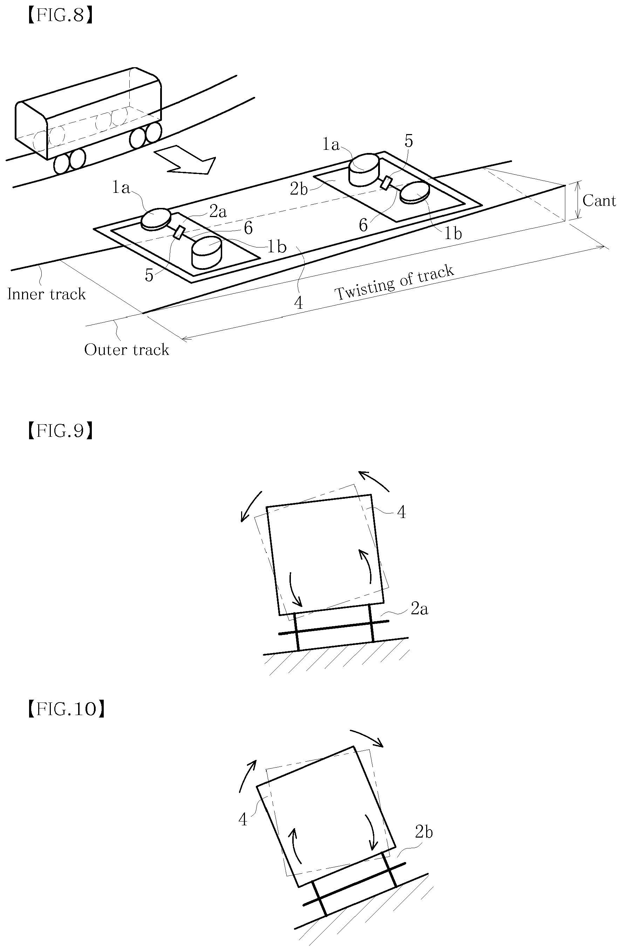

Because the internal pressure of the air springs varies according to the passenger occupancy rate of the vehicle, it is necessary to modify the value of the diagonal differential pressure in response to the passenger occupancy rate of the vehicle. It is therefore desirable to employ structure E. A variable load differential pressure valve is a differential pressure valve operating according to principles illustrated in FIG. 10 of Japanese Patent Application Kokoku Publication No. S57-59106.

TABLE 1 below shows the wheel load variation suppressing effect and the secondary actions of structures A, B, C, D, and E, as well as the wheel load variation suppressing effect and the secondary actions of a railway vehicle according to the present invention that employs these structures. TABLE 1 shows the case of a railway vehicle having an air spring system and the case illustrated in FIG 7 where the front and rear air springs are connected by an air pipe. In TABLE 1, structure A has air springs on either the left or the right side of the front bogie and the rear bogie connected by an air pipe having a front-rear differential pressure valve installed midstream.

In TABLE 1 below, the symbols ⊚, ○, Δ, -, and × are used in comparing railway vehicles having bogies with ordinary air spring systems shown in FIG. 7, and ⊚ indicates great improvement, ○ indicates improvement, Δ indicates slight improvement, - indicates no change, and × indicates worsening.

**TABLE 1**

| | Wheel load variation suppressing effect | | Secondary actions | | |
|---|---|---|---|---|---|
| | During ordinary travel | Low speed and stopping | Front-back imbalance | Vehicle body pitching oscillation | Vehicle body pitching vibration |
| Structure A | ○ | ○ | ○ | ○ | ○ |
| Structure B | ○ | ⊚ | - | - | ⊚ |
| Structure C | - | - | ⊚ | - | - |
| Structure D | ⊚ | ⊚ | - | - | - |
| Structure E | ⊚ | ⊚ | - | ⊚ | ⊚ |
| Air pipe only | ⊚ | ⊚ | × | × | × |
| FIG. 7 | Δ | Δ | ○ | ○ | ○ |
| Invention Ex. 1 (Structures A-C) | ⊚ | ⊚ | ⊚ | ○ | ⊚ |
| Invention Ex. 2 (Structures A-D) | ⊚ | ⊚ | ⊚ | ○ | ⊚ |
| Invention Ex. 3 (Structures A-E) | ⊚ | ⊚ | ⊚ | ⊚ | ⊚ |

As shown in TABLE 1, according to the present invention, it is possible to suppress wheel load variation that occurs when a railway vehicle stops in a section with diminishing cant such as a transition curved section, while taking into consideration resistance to the front-rear imbalance, the vehicle body pitching oscillation, and the vehicle body pitching vibration.

Even in the case of Structure A, in which air springs installed on both the left and right sides of the front bogie and the rear bogie are connected by an air pipe having a front-rear differential pressure regulating valve installed midstream, it is possible to suppress wheel load variation more than in the prior art, by employing Structures B-E.

### ADVANTAGEOUS EFFECTS OF THE INVENTION

The present invention makes it possible to suppress wheel load variations that occur when a railway vehicle is stopped in a section with diminishing cant, while taking into consideration resistance to the front-rear imbalance, the vehicle body pitching oscillation, and the vehicle body pitching vibration, thereby improving safety in sections with diminishing cant.

### BRIEF DESCRIPTION OF THE DRAWINGS

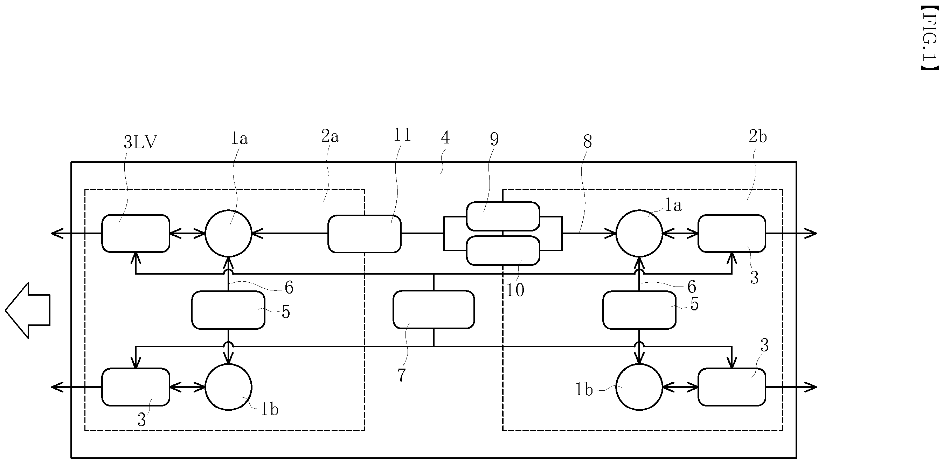

FIG. 1 is a schematic structural drawing of an air spring system in the first railway vehicle according to the present invention.
FIG. 2 is a schematic structural drawing of an air spring system in the second railway vehicle according to the present invention.

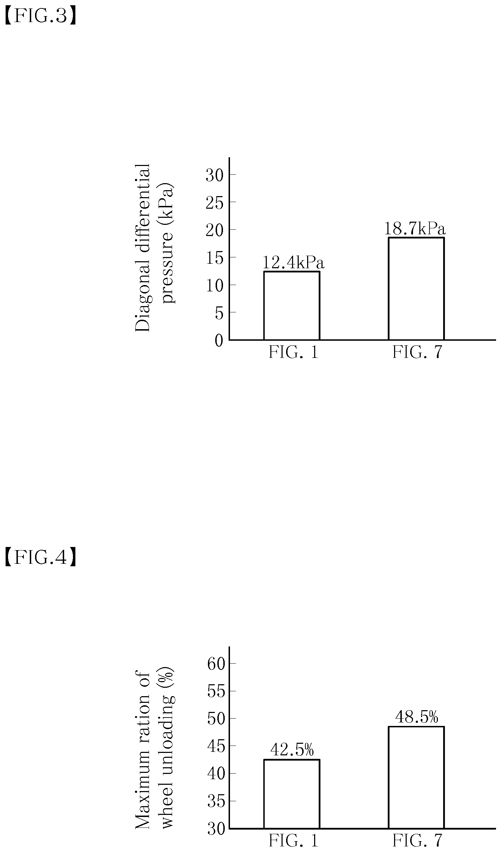

FIG. 3 is a graph comparing the decelerating effects of wheel load variation of the first railway vehicle according to the present invention shown in FIG. 1 with that of a prior art example shown in FIG. 7, in terms of diagonal differential pressure.
FIG. 4 is a graph comparing the decelerating effects of wheel load variation of the first railway vehicle according to the present invention shown in FIG. 1 with that of a prior art example shown in FIG. 7, in terms of the ration of the wheel unloading.

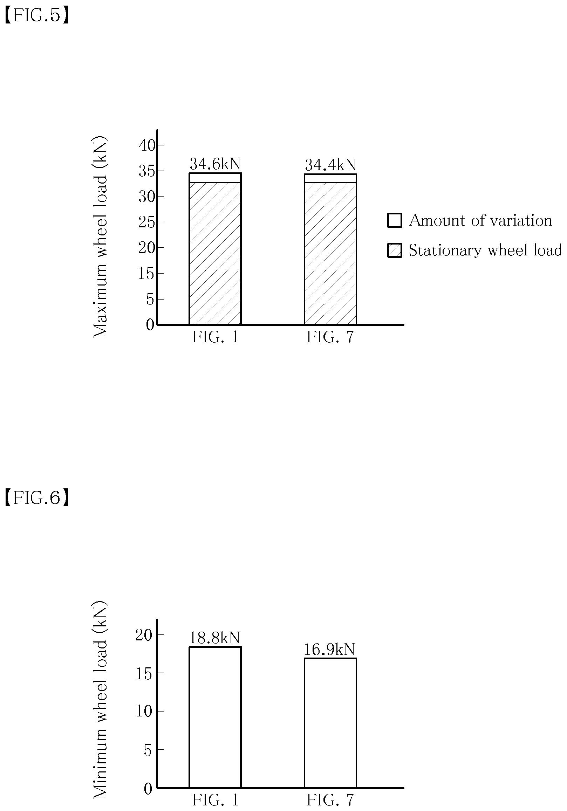

FIG. 5 is a graph comparing the effect of the vehicle body pitching oscillation of the first railway vehicle according to the present invention shown in FIG. 1 with that of a prior art example shown in FIG. 7.
FIG. 6 is a graph comparing the effect of the vehicle body pitching vibration of the first railway vehicle according to the present invention shown in FIG. 1 with that of a prior art example shown in FIG. 7.
FIG. 7 is a schematic structural drawing of a conventional air spring system of a railway vehicle.
FIG. 8 is a drawing illustrating the behavior of air springs in a railway vehicle having a conventional air spring system while in a transition curved section on a curve exit side.
FIG. 9 is a drawing illustrating the moment operating on the front part of a vehicle body of a railway vehicle having a conventional air spring system while in a transition curved section on a curve exit side.
FIG. 10 is a drawing illustrating the moment operating on the rear part of a vehicle body of a railway vehicle having a conventional air spring system while in a transition curved section on a curve exit side.
FIG. 11 is a schematic structural drawing of the air spring system of the railway vehicle disclosed in Patent Reference 1.
FIG. 12 is a drawing illustrating of a pathway of an air pipe for compressed air in FIG. 11.

### EMBODIMENT OF THE INVENTION

The object of the present invention, which is to suppress wheel load variation that occurs when a railway vehicle stops in a section with diminishing cant such as a transition curved section on a curve exit side, is achieved according to the present invention by employing at least Structure A, and additionally by using Structure B or Structure C.

### EXAMPLES

Following is a description of results of time-history simulation using numerical integration which confirms the effect of wheel load variation suppression in the railway vehicle according to the present invention.

The vehicle model used in the simulation employed the conventional air spring system shown in FIG. 7, a commuter train car with a length of 20 m having the air spring system of the present invention shown in FIG. 1, and the track had a radius of curvature of 400 m, a cant of 105 mm, and a cant diminishing rate of 400-fold.

### a) Wheel load variation suppression effect (see FIG. 3 and FIG. 4)

Simulations were carried out assuming a case where the traveling conditions were such that the railroad vehicle stopped for 120 seconds on a transition curve of exit side when traveling through a curved section.

As a result, in the case of a railway vehicle having a conventional air spring system shown in FIG. 7, the action of the LV caused a diagonal differential pressure of 18.7 kPa to occur, thus giving rise to decrease of wheel load. By contrast, in the case of a railway vehicle having an air spring system of the present invention shown in FIG. 1, the diagonal differential pressure decreased to 12.4 kPa (see FIG. 3).

The maximum ration of the wheel unloading was 48.5% in the case of a railway vehicle having a conventional air spring system shown in FIG. 7. By contrast, in the case of a railway vehicle having an air spring system of the present invention, shown in FIG. 1, the maximum ration of the wheel unloading fell by 6.0% to 42.5%, making it possible to prevent decrease of wheel load (see FIG. 4).

### b) Effect of vehicle body pitching oscillation (see FIG. 5)

In order to study the effect of acceleration and deceleration, simulations were carried out assuming a case where there was emergency braking (deceleration of 1.31 m/s²) from a speed of 110 km/h.

As a result, the maximum wheel load was 34.4 kN for a railway vehicle with a conventional air spring system shown in FIG. 7. By contrast, in the case of a railway vehicle having an air spring system of the present invention shown in FIG. 1, the result was 34.6 kN, so there was little difference, indicating suppression of vehicle body pitching oscillation.

### c) Effect of vehicle body pitching vibration (see FIG. 6)

Simulations were carried out assuming a case where disturbances in the vertical direction were input from the track (disturbances shown by ORE C 116 Committee, Ques. C 116 Rep., No. 1 (1971), 15, ORE).

As a result, vehicle load fluctuation was 16.9 kN for a railway vehicle with a conventional air spring system shown in FIG. 7. By contrast, in the case of a railway vehicle having an air spring system of the present invention shown in FIG. 1, the result was 18.8 kN, so there was little difference, indicating suppression of vehicle body pitching vibration.

### EXPLANATION OF THE REFERENCE SYMBOLS

- 1a, 1b: Air springs
- 2a: Front bogie
- 2b: Rear bogie
- 3: LV
- 4: Vehicle body
- 5: Left-right differential pressure regulating valve
- 6: Air pipe
- 7: Main air reservoir
- 8: Air pipe
- 9: Front-rear differential pressure regulating valve
- 10: Choke valve
- 11: Differential pressure regulating valve for front-rear imbalance

## Claims

1. A railway vehicle comprising:
Bogies (2a, 2b) oriented in a forward and rearward direction of travel of the railway vehicle;
air springs (1a, 1b) disposed in a left and right width direction of the bogies (2a, 2b);
a level controlling device (3) that tracks a height of the air springs (1a, 1b);
a left-right differential pressure regulating valve (5) installed in an air pipe (6) that connects the air springs (1a, 1b) in the left and right width direction of the bogies (2a, 2b); and
a front-rear differential pressure regulating valve (9) installed in an air pipe (8) that connects the air springs (1a, 1b) in the left and/or right width direction of the bogies (2a, 2b) in the forward and rearward direction of travel;
**characterised by**:
a choke valve (10) installed in parallel with one of the front-rear differential pressure regulating valve (9) and/or a differential pressure regulating valve for front-rear imbalance (11) installed in series with the front-rear differential pressure regulating valve (9).

2. A railway vehicle according to claim 1, wherein
the level controlling device (3) tracks a height of the air springs (1a, 1b) for three of the air springs (1a, 1b); and
the front-rear differential pressure regulating valve (9) is installed in the air pipe (8), without the level controlling device (3) installed so as to track the height of the air springs in the left and right width direction of the bogies oriented in a forward and rearward direction of travel.

3. A railway vehicle according to any one of claims 1-2, wherein a set differential pressure of the front-rear differential pressure regulating valve (9) is set lower than the set differential pressure of the left-right differential pressure regulating valve (5), or wherein the front-rear differential pressure regulating valve (9) is a variable load differential pressure valve.

4. A railway vehicle according to any one of claims 1-3, wherein a set differential pressure of the differential pressure regulating valve for front-rear imbalance (11) has a value that takes into consideration the magnitude of the imbalance in the front-rear direction of the railway vehicle, or wherein the differential pressure regulating valve for front-rear imbalance (11) is a variable load differential pressure valve.

5. A railway vehicle according to any one of claims 1-4, wherein the choke valve is an orifice choke valve.

6. A railway vehicle according to any one of claims 1-5, wherein the left-right differential pressure regulating valve (5) is a variable load differential pressure valve.

## Patentansprüche

1. Schienenfahrzeug, umfassend:
Drehgestelle (2a, 2b), die in einer Vorwärts- und Rückwärtsfahrtrichtung des Schienenfahrzeugs ausgerichtet sind;
Luftfedern (1a, 1b), die in einer linken und rechten Breitenrichtung der Drehgestelle (2a, 2b) angeordnet sind;
eine Niveaukontrollvorrichtung (3), die eine Höhe der Luftfedern (1a, 1b) nachverfolgt;
ein Links/Rechts-Differenzdruckregelventil (5), das in einem Luftrohr (6) installiert ist, das die Luftfedern (1a, 1b) in der linken und rechten Breitenrichtung der Drehgestelle (2a, 2b) verbindet; und
ein Vorn/Hinten-Differenzdruckregelventil (9), das in einem Luftrohr (8) installiert ist, das die Luftfedern (1a, 1b) in der linken und/oder rechten Breitenrichtung der Drehgestelle (2a, 2b) in der Vorwärts- und Rückwärtsfahrtrichtung verbindet;
**gekennzeichnet durch**:
ein Drosselventil (10), das parallel mit dem Vorn/Hinten-Differenzdruckregelventil (9) und/oder einem Differenzdruckregelventil (11) für ein Vorn/Hinten-Ungleichgewicht installiert ist, das in Reihe mit dem Vorn/Hinten-Differenzdruckregelventil (9) installiert ist.

2. Schienenfahrzeug nach Anspruch 1, wobei
die Niveaukontrollvorrichtung (3) eine Höhe der Luftfedern (1a, 1b) für drei der Luftfedern (1a, 1b) nachverfolgt; und
das Vorn/Hinten-Differenzdruckregelventil (9) in dem Luftrohr (8) installiert ist, ohne dass die Niveaukontrollvorrichtung (3) installiert ist, um die Höhe der Luftfedern in der linken und rechten Breitenrichtung der in einer Vorwärts- und Rückwärtsfahrtrichtung ausgerichteten Drehgestelle nachzuverfolgen.

3. Schienenfahrzeug nach einem der Ansprüche 1 bis 2, wobei ein eingestellter Differenzdruck des Vorn/Hinten-Differenzdruckregelventils (9) niedriger eingestellt ist als ein eingestellter Differenzdruck des Links/Rechts-Differenzdruckregelventils (5), oder wobei das Vorn/Hinten-Differenzdruckregelventil (9) ein Differenzdruckventil variabler Belastung ist.

4. Schienenfahrzeug nach einem der Ansprüche 1 bis 3, wobei ein eingestellter Differenzdruck des Differenzdruckregelventils (11) für ein Vorn/Hinten-Ungleichgewicht einen Wert hat, der die Größe des Ungleichgewichts in der Vorwärts/Rückwärtsrichtung des Schienenfahrzeugs berücksichtigt, oder wobei das Differenzdruckregelventil (11) für ein Vorn/Hinten-Ungleichgewicht ein Differenzdruckventil variabler Belastung ist.

5. Schienenfahrzeug nach einem der Ansprüche 1 bis 4, wobei das Drosselventil ein Düsendrosselventil ist.

6. Schienenfahrzeug nach einem der Ansprüche 1 bis 5, wobei das Links/Rechts-Differenzdruckregelventil (5) ein Differenzdruckventil variabler Belastung ist.

## Revendications

1. Véhicule ferroviaire comprenant :
des bogies (2a, 2b) orientés dans une direction de déplacement vers l'avant et vers l'arrière du véhicule ferroviaire ;
des ressorts pneumatiques (1a, 1b) disposés dans le sens de la largeur gauche et droite des bogies (2a, 2b) ;
un dispositif de contrôle de niveau (3) qui suit une hauteur des ressorts pneumatiques (1a, 1b) ;
une soupape de régulation de pression différentielle gauche - droite (5) installée dans un tuyau d'air (6) qui raccorde les ressorts pneumatiques (1a, 1b) dans le sens de la largeur gauche et droite des bogies (2a, 2b) ; et
une soupape de régulation de pression différentielle avant - arrière (9) installée dans un tuyau d'air (8) qui raccorde les ressorts pneumatiques (1a, 1b) dans le sens de la largeur gauche et/ou droite des bogies (2a, 2b) dans la direction de déplacement avant et arrière ;
**caractérisé par** :
un étrangleur (10) installé parallèlement à l'une parmi la soupape de régulation de pression différentielle avant - arrière (9) et/ou une soupape de régulation de pression différentielle pour le déséquilibre avant - arrière (11), installée en série avec la soupape de régulation de pression différentielle avant - arrière (9).

2. Véhicule ferroviaire selon la revendication 1, dans lequel :
le dispositif de contrôle de niveau (3) suit une hauteur des ressorts pneumatiques (1a, 1b) pour trois des ressorts pneumatiques (1a, 1b) ; et
la soupape de régulation de pression différentielle avant - arrière (9) est installée dans le tuyau d'air (8), sans le dispositif de contrôle de niveau (3) installé afin de suivre la hauteur des ressorts pneumatiques dans le sens de la largeur gauche et droite des bogies orientés dans une direction de déplacement avant et arrière.

3. Véhicule ferroviaire selon l'une quelconque des revendications 1 à 2, dans lequel une pression différentielle de consigne de la soupape de régulation de pression différentielle avant - arrière (9) est inférieure à la pression différentielle de consigne de la soupape de régulation de pression différentielle gauche - droite (5), ou bien dans lequel la soupape de régulation de pression différentielle avant - arrière (9) est une soupape de pression différentielle à charge variable.

4. Véhicule ferroviaire selon l'une quelconque des revendications 1 à 3, dans lequel une pression différentielle de consigne de la soupape de régulation de pression différentielle pour le déséquilibre avant - arrière (11) a une valeur qui prend en considération la grandeur du déséquilibre dans la direction avant - arrière du véhicule ferroviaire, ou bien dans lequel la soupape de régulation de pression différentielle pour le déséquilibre avant - arrière (11) est une soupape de pression différentielle à charge variable.

5. Véhicule ferroviaire selon l'une quelconque des revendications 1 à 4, dans lequel l'étrangleur est un étrangleur d'orifice.

6. Véhicule ferroviaire selon l'une quelconque des revendications 1 à 5, dans lequel la soupape de régulation de pression différentielle gauche - droite (5) est une soupape de pression différentielle à charge variable.
